# EUROPÄISCHE PATENTSCHRIFT

(11) **EP 1 738 257 B1**
(45) Veröffentlichungstag und Bekanntmachung des Hinweises auf die Patenterteilung: **31.10.2012**
(21) Anmeldenummer: 05747879.4
(22) Anmeldetag: 30.03.2005
(51) Int. Cl.: G06F 9/45, G06F 9/46

(54) **VERFAHREN ZUM VERMEIDEN VON DATENINKONSISTENZ ZWISCHEN ZUGRIFFEN VERSCHIEDENER FUNKTIONEN EINER ANWENDUNG AUF EINE GLOBALE VARIABLE IN EINER DATENVERARBEITUNGSANLAGE**
METHOD FOR PREVENTING DATA INCONSISTENCY BETWEEN ACCESSES OF DIFFERENT FUNCTIONS OF AN APPLICATION TO A GLOBAL VARIABLE IN A DATA PROCESSING INSTALLATION
PROCEDE DESTINE A EMPECHER L'INCONSISTANCE DE DONNEES ENTRE LES ACCES DE DIFFERENTES FONCTIONS D'UNE APPLICATION A UNE VARIABLE GLOBALE DANS UNE INSTALLATION DE TRAITEMENT DE DONNEES

(30) Priorität: 07.04.2004 DE 102004017050
(43) Veröffentlichungstag der Anmeldung: 03.01.2007
(73) Patentinhaber: ROBERT BOSCH GMBH, 70442 Stuttgart (DE)
(72) Erfinder: WOERSCHING, Udo, 74211 Leingarten (DE); LUNT, Martin, 71706 Markgroeningen (DE); MARKUS, Elmar, 71696 Moeglingen (DE); BIEGERT, Uwe, 70597 Stuttgart (DE)
(86) Internationale Anmeldenummer: PCT/EP2005/051449
(87) Internationale Veröffentlichungsnummer: WO 2005/098617

(56) Entgegenhaltungen:
- DE-A1- 19 728 971
- US-A- 5 608 893
- US-A- 6 009 426

## Beschreibung

### Gebiet der Erfindung

Die vorliegende Erfindung betrifft das Problem der Datenkonsistenz in einer Datenverarbeitungsanlage, auf der eine Echtzeitanwendung läuft. Eine solche Anwendung besteht im Allgemeinen aus einer Vielzahl von Funktionen, die, ohne zeitlich fest miteinander koordiniert zu sein, auf gemeinsam benutzte Variablen, auch als globale Variablen bezeichnet, schreibend oder lesend zugreifen. Wenn eine solche Funktion zur Durchführung einer Berechnung mehrere Male nacheinander eine solche Variable liest, und zwischen zwei solchen Lesezugriffen die Variable durch eine andere Funktion verändert wird, so kann davon ausgegangen werden, dass das Ergebnis der Berechnung fehlerhaft sein wird. Genauso ergeben sich Fehler, wenn eine Berechnung mehrere Schreibzugriffe auf die globale Variable erfordert, bei denen zeitweilige Zwischenergebnisse in der Variablen gespeichert werden, wenn eine andere Funktion lesend auf ein solches Zwischenergebnis zugreift.

Funktionen, die auf eine gleiche globale Variable zugreifen, werden im Rahmen dieser Anmeldung als interferierende Funktionen bezeichnet, unabhängig davon, ob im Einzelfall ein Konflikt zuwischen den Funktionen tatsächlich möglich ist.

zugreifen, werden im Rahmen dieser Anmeldung als interferierende Funktionen bezeichnet, unabhängig davon, ob im Einzelfall ein Konflikt zuwischen den Funktionen tatsächlich möglich ist.

Eine bekannte Technik, um die Konsistenz globaler Variablen in einem Datenverarbeitungssystem zu gewährleisten ist, immer dann, wenn eine Funktion auf eine globale Variable zugreift, die durch einen überschneidenden Zugriff einer interferierenden Funktion gestört werden könnte, alle anderen Funktionen vom Zugriff auf die gleiche Variable auszuschließen. Ein solches Verfahren ist jedoch für Echtzeitanwendungen im Allgemeinen nicht geeignet, da die Ausführung von Funktionen, die auf eine vom Zugriff ausgeschlossene Variable zugreifen müssen, angehalten werden muss, bis der Zugriff auf die Variable wieder zugelassen wird, was zu nicht vorhersagbaren Verzögerungen in der Ausführung dieser Funktionen führen kann.

Die Patentschrift US 6,009,426 offenbart ein Verfahren, welches diese Technik noch verfeinert, indem je nach Art des Zugriffs einer Funktion auf eine globale Variable verschiedene Arten einer Sperrung dieser Variable für Zugriffe anderer Funktionen definiert werden und ein komplexes Regelwerk die Sperrung und Aufhebung der Zugriffe vorschreibt. Das Verfahren erreicht so zwar eine Verbesserung hinsichtlich der Wartezeiten, wann eine Funktion auf eine bestimmte Variable wieder zugreifen darf, kann die durch die Wartezeiten bedingten Verzögerungen jedoch nicht gänzlich beseitigen.

Eine andere bekannte Methode, die Datenkonsistenz zu gewährleisten, ist in der Patentschrift DE 197 28 971 A1 offenbart. Für die einzelnen Funktionen werden jeweils Kopien der globalen Variablen verwendet. D.h., eine interferierende Funktion erzeugt jeweils zu Beginn ihrer Ausführung eine lokale Kopie einer benötigten globalen Variablen, arbeitet anschließend mit dieser Kopie, und falls die Funktion in der Lage ist, die Variable zu ändern, wird vor ihrem Abschluss die lokale in die globale Variable zurück kopiert, wobei die Kopiervorgänge jeweils nicht durch andere Funktionen unterbrechbar sind.

Funktion von allen globalen Variablen, die die Funktion benötigt, lokale Kopien angelegt werden. Eine solche Vorgehensweise führt jedoch zu einem erheblich erhöhten Bedarf an Speicher und Verarbeitungsleistung.

Zum Zeitpunkt der Systemintegration ist stets eine Aussage möglich, von welchen globalen Größen in welcher Funktion eine Kopie benötigt wird, da zu diesem Zeitpunkt alle Funktionen sowie ihre Aufrufhäufigkeit und Priorität (ihr Recht, andere Funktionen zu unterbrechen) bekannt sind. Um die Systemintegration zu erleichtern, existieren verschiedene Software-Werkzeuge wie z.B. OLT (Off Line Tool) oder ESCAPE (www.etas.com), die im vorhandenen Sourcecode anhand von Zusatzinformationen die Funktionen identifizieren, die zur Gewährleistung der Datenkonsistenz mit Kopien arbeiten müssen, und diese Funktionen so abändern, dass sie statt mit den Originalgrößen mit entsprechenden Kopien arbeiten. Darüber hinaus werden entsprechende Kopierprozesse generiert. Diese Kopierprozesse synchronisieren je nach Betriebssystemkonfiguration, welche statisch ist, die Kopien mit ihren Originalgrößen von einer oder mehreren Funktion(en), die gemeinsame Kopien verwenden können, da sie sich nicht gegenseitig unterbrechen. Da diese Tools die Betriebsystem-Konfiguration lesen um die Priorität und Gruppierung der einzelnen Funktionen zu ermitteln, können Sie auch automatisch in die BetriebssystemKonfiguration vor- oder nach einer Funktion bzw. Funktionsgruppe die notwendigen Kopierprozesse einfügen.

Die Anwendbarkeit dieser Werkzeuge ist eingeschränkt durch die Tatsache, dass sie darauf angewiesen sind, den Quellcode zu verändern. Dieser steht jedoch nicht zwangsläufig immer zur Verfügung. Insbesondere wenn ein Entwicklungspartner Funktionen von einem Dritten geliefert bekommt, so wird dieser Dritte die Funktionen aus Geheimhaltungsgründen häufig nicht in Form von Quellcode, sondern allenfalls als Objektcode zur Verfügung stellen. Derartige Funktionen können mit den bekannten Werkzeugen nicht bearbeitet werden, so dass zur Gewährleistung der Konfliktfreiheit umfangreiche nicht automatisierbare und damit kostspielige und fehleranfällige Änderungen an den im Sourcecode vorliegenden Funktionen erforderlich sein können.

Außerdem macht der Eingriff in den Quellcode jedes Mal eine Neuübersetzung des geänderten Codes erforderlich. Insbesondere Änderungen der Priorität einer Funktion (z.B. Betriebssystemkonfiguration) können umfangreiche Änderungen im Quellcode einer großen Zahl anderer Funktionen nach sich ziehen. Bei großen Programmsystemen kann dies zu sehr langen Übersetzungszeiten führen, die den Entwicklungsprozess erheblich verzögern können.

Ein weiteres Problem ist, dass die bekannten Entwicklungswerkzeuge jeweils auf bestimmte Hochsprachen zugeschnitten sind, d.h., für die Verarbeitung von in unterschiedlichen Hochsprachen geschriebenen Funktionen zu einer Anwendung nicht geeignet sind.

### Vorteile der Erfindung

Durch die vorliegende Erfindung werden Verfahren zum Vermeiden von Dateninkonsistenz und Entwicklungswerkzeuge zur Anwendung dieser Verfahrens geschaffen, die auf beliebige Funktionen unabhängig von einer Hochsprache, in der ihr Quellcode geschrieben ist, bzw. unabhängig davon, ob überhaupt ein Quellcode verfügbar ist, anwendbar sind, und die ein zügiges Entwickeln ermöglichen.

Die Vorteile werden zum einen erreicht, indem das Verfahren gemäß Anspruch 1 die für die Verwendung einer Hilfsvariable erforderliche Initialisierung derselben unmittelbar in den vorhandenen Objektcode einfügt, anstatt sie in den Quellcode einzufügen und diesen anschließend in Objektcode zu übersetzen. Die Einfügung kann darin bestehen, dass die zur Initialisierung erforderlichen Programmschritte unmittelbar in die identifizierte Funktion oder in eine die identifizierte Funktion aufrufende Funktion vor deren Aufruf eingefügt werden, oder durch Einfügen eines Sprungbefehls zu einer Hilfsfunktion, die die Initialisierung übernimmt.

Die Hilfsvariable kann eine lokale Variable der sie verwendenden Funktion darstellen, d.h. eine Variable, die nur innerhalb dieser Funktion definiert und zugreifbar ist. In der Praxis ist die Hilfsvariable vorteilhafterweise global definiert, weil dann mehrere interferierende Funktionen, von denen bekannt ist, dass sie miteinander nicht in Konflikt geraten, die gleiche Hilfsvariable verwenden können. Eine Ersetzung von Zugriffen einer ausgewählten Funktion auf die globale Variable durch Zugriffe auf die Hilfsvariable kann in zweierlei Weise erfolgen. Die eine ist, in dem zunächst noch in symbolischer Form vorliegenden Objektcode der ausgewählten Funktion das Symbol der globalen Variable, das z.B. als Argument einer Schreib- oder Leseanweisung vorkommen kann, jeweils einzeln zu identifizieren und durch das Symbol der Hilfsvariablen zu ersetzen. Ein zweiter Ansatz ist, beim Linken des Objektcodes, d.h., wenn im Objektcode alle Symbole durch Verweise auf konkrete Speicheradressen ersetzt werden, das Symbol der globalen Variablen jeweils unmittelbar durch einen Verweis auf die Speicheradresse der sie ersetzenden Hilfsvariablen zu ersetzen und so die Schreib-/Lesezugriffe gleichsam zu "verbiegen".

Die Ersetzung oder "Verbiegung" wird vorzugsweise mit einem speziellen Tool durchgeführt, das eine Objektcode-Datei lesen, darin die Symbole ersetzen oder entsprechende Anweisungen an einen Linker einfügen und sie anschließend wieder als formatgerechte Objektcode-Datei schreiben kann.

Um die Zahl der eine Hilfsvariable anstelle der globalen Variablen verwendenden Funktionen nicht größer als notwendig zu machen, umfasst das Verfahren zweckmäßigerweise einen Schritt c') des Identifizierens von Funktionen unter den interferierenden Funktionen, die in der Lage sind, sich gegenseitig zu unterbrechen, wobei die Einführung der Hilfsvariablen und die Ersetzung der Zugriffe nur auf wenigstens eine der so identifizierten Funktionen angewendet wird. Bei Funktionen, die weder von einer anderen unterbrochen werden, noch eine andere unterbrechen können, ist keine Gefahr der Dateninkonsistenz vorhanden, so dass bei ihnen keine Ersetzung erforderlich ist.

Dieser Schritt c') wird zweckmäßigerweise von dem oben erwähnten Tool ausgeführt, das dafür als Eingabedatei neben der eigentlichen Objektdatei zweckmäßigerweise Zusatzinformation, vorzugsweise in Form einer eine Steuerdatei, bekommt, die angibt, welche von mehreren interferierenden Funktionen in der Lage sind, von einer anderen Funktion unterbrochen zu werden und deshalb mit einer Hilfsvariablen anstelle der globalen Variablen arbeiten müssen.

Die Fähigkeit der interferierenden Funktionen, sich gegenseitig zu unterbrechen, ist in der Zusatzinformation vorzugsweise durch den Funktionen zugeordnete Prioritätswerte festgelegt.

Darüber hinaus werden vorzugsweise die an der wenigstens einen ausgewählten Funktion vorgenommenen Ersetzungen protokolliert, z. B. durch einfaches Einfügen der Steuerdatei in eine Beschreibungssektion der lauffähigen Objektdatei, um einem Debugger diese Information bereitzustellen. Diese Zusatzinformation bietet dem Debugger die Möglichkeit, die durchgeführten Ersetzungen nachzuvollziehen und somit die durch das Tool durchgeführten Änderungen gegenüber dem Benutzer des Debuggers transparent zu machen. Dies ist insbesondere dann von Interesse, wenn zu einem bestimmten Ausführungszeitpunkt der Software Originalvariable und Kopie unterschiedliche Werte beinhalten und der Benutzer nachvollziehen möchte, ob die Funktion, die er testet, auf die Originalvariable oder eine bestimmte Kopie zugreift.

Wenn wenigstens eine der an der ausgewählten Funktion vorgenommenen Ersetzungen einen Schreibzugriff betrifft, d.h., wenn die Funktion in der Lage ist, den Wert der Hilfsvariablen zu ändern, so sollte auch ein Schritt des Überschreibens der globalen Variable mit dem Wert der Hilfsvariablen in den Objektcode der ausgewählten Funktion oder der sie aufrufenden Funktion nach dem Aufruf eingefügt werden, um eine solche Änderung global verfügbar zu machen.

Die Vorteile werden zum anderen erreicht, indem gemäß Anspruch 8 symbolischer Objektcode einer Gesamtheit von in dem Datenverarbeitungssystem auszuführenden Funktionen bereitgestellt wird und unter diesen die interferierenden Funktionen identifiziert werden, wobei die globale Variable in dem symbolischen Objektcode jeder darauf zugreifenden Funktion mit einem jeweils für diese Funktion spezifischen Symbol bezeichnet ist,
wenigstens eine interferierende Funktion ausgewählt wird,
in jeder ausgewählten Funktion oder in einer eine ausgewählte Funktion aufrufenden Funktion vor deren Aufruf eine Anweisung zum Kopieren der globalen Variablen an einen dem funktionsspezifischen Symbol zugeordneten Speicherplatz eingefügt wird und
für jede nicht ausgewählte Funktion das jeweils für die Funktion spezifische Symbol mit einem der globalen Variablen zugeordneten Speicherplatz verknüpft wird.

Um einem Tool, welches das oben definierte Verfahren durchführt, das Identifizieren der jeweils einer gleichen globalen Variablen entsprechenden funktionsspezifischen Symbole zu erleichtern, wird zweckmäßigerweise eine Tabelle bereitgestellt, die die in den Funktionen für die globale Variable verwendeten Symbole enthält.

Wenn der Objektcode mehrerer der interferierenden Funktionen aus Quellcode kompiliert wird, kann zweckmäßigerweise vorgesehen werden, dass ein dafür verwendeter Compiler den im Quellcode der Funktionen enthaltenen gleichen Namen der globalen Variable durch ein für jede Funktion spezifisches Symbol ersetzt und die Tabelle anlegt.

Weitere Merkmale und Vorteile der Erfindung ergeben sich aus der nachfolgenden Beschreibung von Ausführungsbeispielen mit Bezug auf die beigefügten Figuren.

### Figuren

Es zeigen:
- Fig. 1: schematische Stufen eines erfindungsgemäßen Entwicklungswerkzeugs und zwischen ihnen ausgetauschte Datenobjekte;
- Fig. 2: ein Flussdiagramm eines im Objektprozessor der Fig. 1 ablaufenden Arbeitsverfahrens;
- Fig. 3: eine Darstellung analog Fig. 1 einer zweiten Ausgestaltung der Erfindung;
- Fig. 4: eine analoge Darstellung einer dritten Ausgestaltung;
- Fig. 5: eine analoge Darstellung einer vierten Ausgestaltung; und
- Fig. 6: Inhalte von in der vierten Ausgestaltung verwendeten Steuerdateien.

### Beschreibung von Ausführungsbeispielen

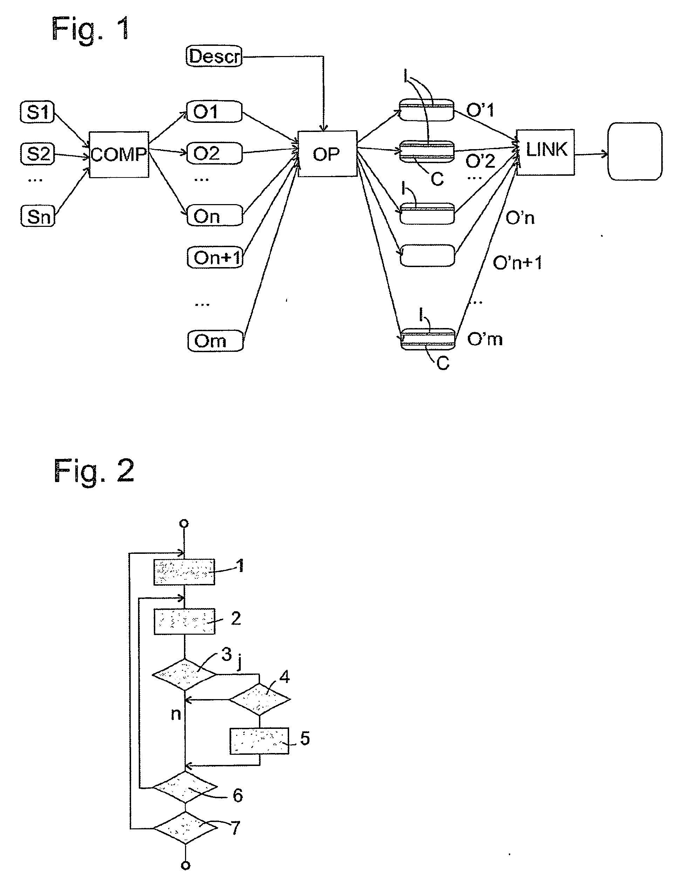

Das in Fig. 1 gezeigte Entwicklungswerkzeug umfasst als erste Stufe einen Compiler COMP, der in einer Hochsprache wie etwa C geschriebene Quellcodes S1, S2, ..., Sn von Funktionen einer in der Entwicklung befindlichen Anwendung in symbolische Objektcode-Funktionen 01, 02, ..., On umwandelt. Der symbolische Objektcode besteht aus Anweisungen, die jeweils 1:1 Anweisungen entsprechen, die von einem Zielprozessor, für den der zu kompilierende Quellcode bestimmt ist, ausführbar sind. Anders als unmittelbar ausführbarer Code nehmen sie jedoch nicht auf feste Speicheradressen für Schreib- oder Lesezugriffe und Sprungbefehle Bezug, sondern auf mit Symbolen bezeichnete Adressen, denen erst in einer späteren Phase der Verarbeitung vom Linker LINK ein fester Wert zugeordnet wird.

Dem Compiler COMP ist ein Objektcode-Prozessor OP nachgeordnet, der die vom Compiler erzeugten Objektcodes 01, 02, ..., On der einzelnen Funktionen sowie gegebenenfalls weitere Objektcodes On+1, ..., Om von nicht von dem Compiler COMP kompilierten Funktionen überarbeitet, um die Konsistenz von globalen Variablen zu gewährleisten, die von mehreren dieser Funktionen verwendet werden. Die Objektcodes On+1, ..., Om können z.B. zu ursprünglich in einer anderen Sprache als der der Quellcodes S1, S2, ..., Sn geschriebenen Funktionen gehören oder zu Funktionen, deren Quellcode nicht zur Verfügung steht, weil es sich um vom Entwickler der Anwendung zugekaufte Funktionen handelt.

Der Objektcode-Prozessor OP hat Zugriff auf eine vom Entwickler bereitgestellte Datei DESCR, die für jede der Objektcode-Funktionen 01, ..., Om globale Variablen, auf die die Funktion zugreift, sowie eine der Funktion zugewiesene Priorität spezifiziert.

Fig. 2 stellt die vom Objektcode-Prozessor OP durchgeführte Verarbeitung anhand eines Flussdiagramms dar. In Schritt 1 wird eine der Objektcode-Funktionen Oi, 1 ≤ i ≤ m ausgewählt. In Schritt 2 wird eine der für die Objektcode-Funktion Oi in der Datei DESCR aufgeführten globalen Variablen ausgewählt, und in Schritt 3 wird, ebenfalls anhand der Datei DESCR, überprüft, ob es mit der ausgewählten Funktion Oi interferierende Funktionen, d. h. Funktionen Oj, 1 ≤ j ≤ m, j ≠ i, gibt, die auf die gleiche globale Variable zugreifen. Wenn ja, wird in Schritt S4 geprüft, welche der Funktionen die höhere Priorität hat. Wenn die Priorität der Funktion Oi niedriger ist, so bedeutet dies, dass sie von der anderen Funktion Oj unterbrochen werden kann, und dass somit die Gefahr von Dateninkonsistenz besteht, wenn die andere, höher priorisierte Funktion Oj die globale Variable zwischen zwei Lesezugriffen der ersten Funktion Oi verändert oder einen nicht definierten Zwischenwert der globalen Variablen zu lesen bekommt. In diesem Fall fügt der Objektprozessor in den Objektcode der Funktion Oi vor dem ersten Zugriff auf die betreffende globale Variable oder in eine die Funktion Oi aufrufende Funktion vor dem Aufruf Anweisungen zum Kopieren dieser Variablen in eine Hilfsvariable ein und ersetzt alle darauf folgenden Zugriffe auf die globale Variable im Objektcode Oi durch solche auf die Hilfsvariable. Wenn bei dieser Ersetzung festgestellt wird, dass wenigstens einer der Zugriffe ein Schreibzugriff ist, wird ferner in die Funktion Oi jeweils eine vor ihrem Abschluss auszuführende Anweisung zum Kopieren des Werts der Hilfsvariablen in die globale Variable eingefügt. Alternativ kann eine solche Anweisung auch in die aufrufende Funktion nach dem Aufruf eingefügt werden.

Wenn die Überprüfung des Schritts 4 ergibt, dass die Funktion Oi die gleiche oder eine höhere Priorität als die andere Funktion Oj hat, so besteht keine Gefahr, dass diese erste Funktion Oi von der anderen Funktion Oj unterbrochen wird, und die Verwendung einer Kopie ist nicht erforderlich. In diesem Fall geht das Verfahren direkt von Schritt 4 zu Schritt 6 über.

Schritt 6 überprüft, ob für die in Schritt 1 gewählte Funktion Oi eine weitere globale Variable in der Datei DESCR verzeichnet ist, und wenn ja, kehrt das Verfahren zu Schritt 2 zurück und wählt eine dieser Variablen aus. Andernfalls wird in Schritt 7 geprüft, ob noch Funktionen zur Verarbeitung anstehen, und wenn nicht, endet das Verfahren.

Auf diese Weise erzeugt der Objektprozessor einen Satz von datenkonsistenten Objektcode-Funktionen O' 1, ..., O'm, in die je nach Art des Zugriffs auf eine globale Variable nur Anweisungen zum Kopieren der globalen in eine lokale Hilfsvariable (wenn die Funktion nur lesend zugreift, symbolisch dargestellt durch einen einzelnen schraffierten Block I im Fall der Funktionen O'1, O'n), Anweisungen zum Kopieren der globalen in die lokale Variable und zurück (bei Schreib- und Lesezugriff, symbolisch dargestellt durch zwei schraffierte Blöcke I, C im Fall der Funktionen O'2, O'm) oder gar keine Anweisungen, wie im Fall der Funktion O'n+1 eingefügt sind, falls die betreffende Funktion die höchste Priorität hat, die auf die betreffende globale Variable zugreifenden Funktionen zugewiesen ist.

Die so erhaltenen konsistenten Objektfunktionen werden in an sich bekannter Weise vom Linker LINK zu einer ausführbaren Anwendung zusammengefügt, indem alle Symbole des Objektcodes durch explizite Adressen von Speicherplätzen ersetzt werden.

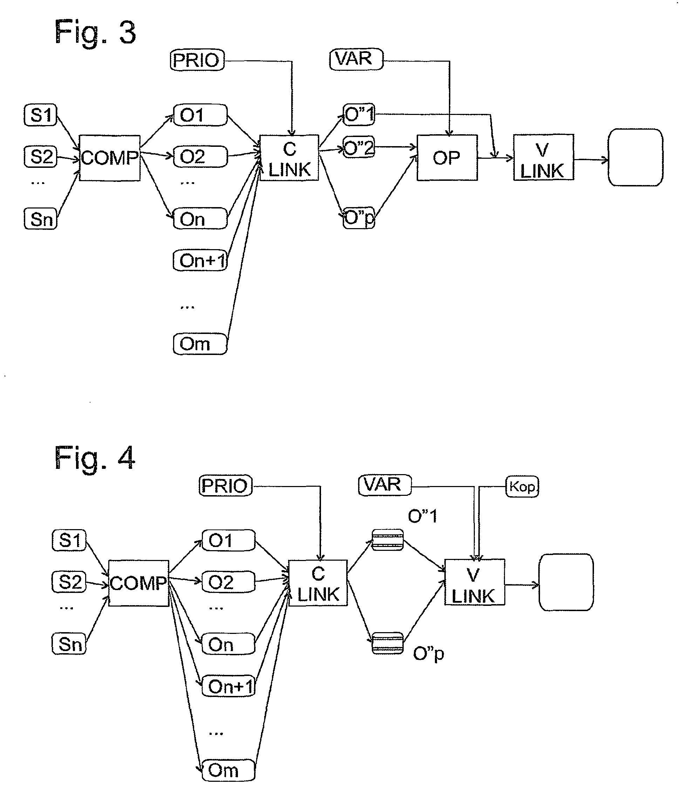

Eine bevorzugte Weiterbildung des Entwicklungswerkzeugs bzw. von dessen Arbeitsweise wird anhand von Fig. 3 beschrieben. Der Compiler COMP, die von ihm aus Quellcode-Funktionen S1, ..., Sn erzeugten Objektcode-Funktionen O1, ..., On sowie die externen Objektfunktionen On+1, ..., Om sind die gleichen wie in Fig. 1. Anders als in Fig. 1 werden diese Funktionen jedoch nicht von einem Objektcode-Prozessor OP verarbeitet, um sie datenkonsistent zu machen, sondern sie durchlaufen einen Code-Linker CLINK, der Objektcode-Blöcke O"1, ..., O"p erzeugt. Die Zahl dieser Blöcke entspricht der Zahl der den Objektcode-Funktionen zugewiesenen und in einer vom Code-Linker CLINK gelesenen Datei PRIO für die einzelnen Objektcode-Funktionen O1, Om spezifizierten Prioritätsniveaus. Jeder Objektcode-Block O"1, O"p enthält Funktionen des gleichen Prioritätsniveaus. Die Funktionen mit der höchsten Priorität sind im Block 0"1 zusammengefasst, diese Funktionen können gefahrlos unmittelbar auf ihre globalen Variablen zugreifen und bedürfen keiner Verarbeitung im Objektcode-Prozessor OP. Alle anderen Blöcke O"2 bis O"p werden im Objektcode-Prozessor OP der mit Bezug auf Figs. 1 und 2 beschriebenen Konsistenzverarbeitung unterzogen. Durch die Zusammenfassung der Funktionen zu den größeren Blöcken wird die Verarbeitung im Objektcode-Prozessor OP effektiviert. Da die Funktionen jedes einzelnen Blocks sich nicht gegenseitig unterbrechen, können sie für jede globale Variable eine gemeinsame lokale Kopie verwenden, wodurch Speicherplatz gespart wird.

Die konsistenzverarbeiteten Blöcke O"1 bis O"p durchlaufen anschließend eine weitere Linkerstufe, als Variablen-Linker VLINK bezeichnet, der alle symbolischen Bezugnahmen auf Speicherplätze durch explizite Speicheradressen ersetzt, und Sprungadressen, die im Code-Linker noch nicht durch explizite Adressen ersetzt werden konnten, weil sie Sprünge zwischen verschiedenen Blöcken darstellten, werden aufgelöst. So wird schließlich die fertige, ausführbare Anwendung erhalten.

Bei der in Fig. 4 dargestellten Ausgestaltung unterscheidet sich der Aufbau und die Verarbeitung bis zur Erzeugung der Objektcode-Blöcke O"1, ..., O"p nicht von der der Fig. 3. Der Objektcode-Prozessor ist entfallen, statt dessen ist die Arbeitsweise des Variablen-Linkers VLINK verändert. Dieser liest die Datei VAR, die für jede Funktion die globalen Variablen spezifiziert, auf die sie zugreift, und ermittelt anhand dieser Information die in jedem der Objektcode-Blöcke O"2 bis O"p verwendeten globalen Variablen. Jede dieser globalen Variablen bekommt beim Linken der Objektcode-Blöcke in jedem Block jeweils eine andere explizite Speicheradresse zugewiesen. Anschließend verknüpft der Variablen-Linker VLINK jede einzelne Funktion der Objektcode-Blöcke mit aus einer Bibliothek gelesenen Kopierfunktionen derart, dass die Kopierfunktionen jeweils zu Beginn bzw. Abschluss einer Funktion ausgeführt werden, wobei diese Kopierfunktionen jeweils die von der betreffenden Funktion verwendeten globalen Variablen an den ihnen für die Objektcode-Gruppe O"1, ..., O"p dieser Funktion zugewiesenen Speicherplatz bzw. zurück kopieren. Dadurch wird die bei den anderen Ausführungsbeispielen vom Objektcode-Prozessor OP vorgenommene Manipulation des Objektcodes überflüssig, und dennoch wird erreicht, dass alle Funktionen, bei denen die Gefahr einer Unterbrechung durch höher priorisierte Funktionen besteht, niemals auf Originale, sondern immer nur auf Kopien von globalen Variablen zugreifen.

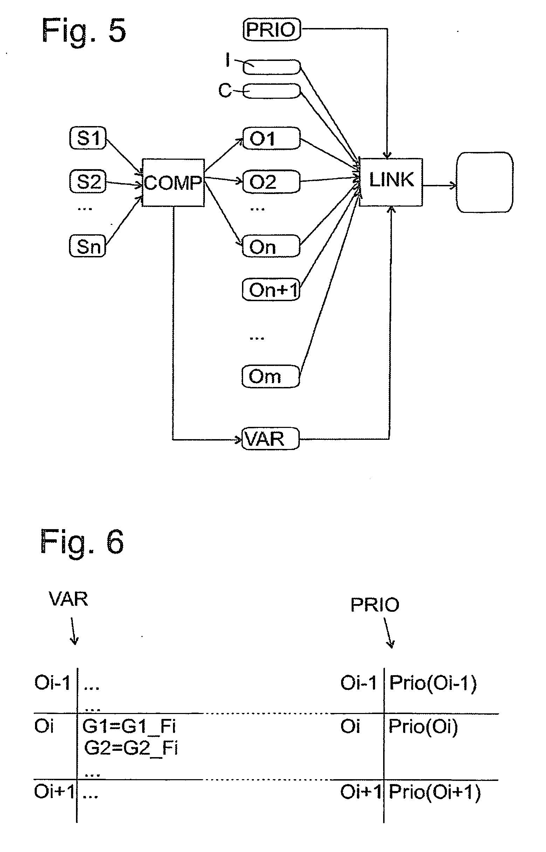

Fig. 5 zeigt schematisch die Stufen der Verarbeitung gemäß einer vierten Ausgestaltung der Erfindung. Wie bei den vorhergehenden Ausführungsbeispielen ist die erste Stufe ein Compiler COMP, der in einem Quellcode geschriebene Funktionen S1, S2, ..., Sn in symbolischen Objektcode 01, ..., On umwandelt. Eine Besonderheit des Compilers der Fig. 5 ist, dass er in dem symbolischen Objektcode für eine von mehreren Funktionen benutzte und in deren Quellcode mit einem gleichen Namen bezeichnete globale Variable nicht deren Quellcodenamen im symbolischen Objektcode aller dieser interferierenden Funktionen einheitlich als Symbol für die globale Variable verwendet, sondern im Objektcode jeder Funktion für die betreffende Funktion spezifische Symbole für die einzelnen Variablen verwendet. Dies kann z.B. erfolgen, indem der Compiler Symbole des Objektcodes jeweils durch Verketten des in einer Funktion des Quellcodes aufgerufenen Variablen mit dem Namen der aufrufenden Funktion erzeugt. D.h., einer im Quellcode S1, S2 von Funktionen F1, F2 mit G1 bezeichneten globalen Variablen wird in den von dem Compiler erzeugten Objektcodes O1, 02 der betreffenden Funktionen jeweils das Symbol G1_F1 bzw. G1_F2 zugeordnet.

Während des Kompilierens legt der Compiler COMP eine Steuerdatei VAR an, in der, wie in Fig. 6 gezeigt, zu jeder Objektcodefunktion Oi das in diesem Objektcode für eine globale Variable wie etwa G1, G2 verwendete Symbol, hier G1_Fi bzw. G2_Fi, angegeben ist. Die Steuerdatei VAR hat vorzugsweise eine mit einem herkömmlichen Texteditor editierbare Form, die es einem Entwickler ermöglicht, die Einträge der Steuerdatei für Funktionen On+1 bis Om, die nicht vom Compiler COMP kompiliert werden, sondern von vorneherein in Form von symbolischem Objektcode vorliegen, die Entsprechungen zwischen in den Quellcodes S1 bis Sn verwendeten Bezeichnungen von globalen Variablen und deren Bezeichnungen in den Objektcodes On+1, ..., Om von Hand zu ergänzen.

Eine zweite Steuerdatei PRIO gibt, wie ebenfalls in Fig. 6 gezeigt, für jede Objektcodefunktion Oi, i = 1, ..., m einen Prioritätswert PRIO (Oi) an, der das Recht der betreffenden Funktion angibt, den Ablauf anderer Funktionen zu unterbrechen.

Ein Linker LINK ersetzt in den symbolischen Objektcodes 01, ..., On die Symbole durch Verweise auf explizite Speicherplätze, um so eine lauffähige Anwendung zu erzeugen. Der Linker berücksichtigt dabei den Inhalt der Steuerdateien VAR und PRIO. Nur bei einer Funktion mit dem höchstmöglichen Prioritätsniveau ersetzt der Linker das in dieser Funktion für eine globale Variable verwendete Symbol durch einen Verweis auf den tatsächlichen Speicherplatz dieser Variablen. Vor den Aufruf einer Funktion mit einem anderen als dem höchstmöglichen Prioritätsniveau bindet der Linker einen Aufruf einer Kopierfunktion I ein, die eine Kopie einer von der Funktion verwendeten globalen Variable anlegt, und im Objektcode der betreffenden Funktion ersetzt der Linker die in dieser Funktion für die globale Variable verwendeten Symbole durch Verweise auf die Adresse der von der Kopierfunktion angelegten Kopie. Wenn die Funktion auf die globale Variable schreibend zugreift, wird nach Beendigung der Funktion zusätzlich eine Rückkopierfunktion C eingebunden, die den Wert der Kopie der globalen Variablen an deren tatsächlichen Speicherplatz rückkopiert.

In der von dem Linker erzeugten lauffähigen Anwendung werden folglich bis zu k-1 Kopien einer globalen Variablen angelegt, wenn k die Zahl der möglichen Prioritätsniveaus der Funktionen O1 bis Om ist, und Funktionen mit gleichen Prioritätsniveau, die sich nicht gegenseitig unterbrechen können, greifen jeweils auf eine gleiche Kopie zu. So wird hier wie bei den Ausgestaltungen der Figs. 3 und 4 der zum Anlegen der Kopien benötigte Speicherplatz auf ein Minimum beschränkt.

## Patentansprüche

1. Verfahren zum Vermeiden von Dateninkonsistenz zwischen Zugriffen verschiedener Funktionen einer Anwendung auf eine globale Variable in einem Datenverarbeitungssystem, wobei das Datenverarbeitungssystem symbolischen Objektcode einer Gesamtheit von in dem Datenverarbeitungssystem auszuführenden Funktionen (O1, ..., Om) bereitstellt und die Funktionen interferierende Funktionen (O1, 02, On, Om) umfassen, welche auf eine gleiche globale Variable zugreifen, **dadurch gekennzeichnet, dass** das Verfahren folgende Schritte umfasst:
a) Identifizieren derjenigen interferierenden Funktionen (O1, 02, On, Om) aus der Gesamtheit, die auf eine gleiche globale Variable zugreifen;
b) Auswählen wenigstens einer interferierenden Funktion;
c) Einfügen eines Schrittes (I) des Initialisierens einer Hilfsvariablen mit dem Wert der globalen Variablen in den Objektcode jeder in Schritt b) ausgewählten Funktion oder einer eine ausgewählte Funktion aufrufenden Funktion vor deren Aufruf;
d) Ersetzen eines Symbols der globalen Variablen in dem Objektcode der ausgewählten Funktion durch einen Verweis auf einen Speicherplatz der Hilfsvariablen.

2. Verfahren nach Anspruch 1, **dadurch gekennzeichnet, dass** in Schritt d) im symbolischen Objektcode der ausgewählten Funktion das Symbol der globalen Variablen durch das Symbol der Hilfsvariablen ersetzt und anschließend das Symbol der Hilfsvariablen durch den Verweis auf den Speicherplatz der Hilfsvariablen ersetzt wird.

3. Verfahren nach Anspruch 1, **dadurch gekennzeichnet, dass** in Schritt d) ein Linker das Symbol der globalen Variablen unmittelbar durch den Verweis auf den Speicherplatz der Hilfsvariablen ersetzt.

4. Verfahren nach Anspruch 3, **dadurch gekennzeichnet, dass** der Linker in wenigstens einer nicht ausgewählten interferierenden Funktion das Symbol der globalen Variablen durch einen Verweis auf einen Speicherplatz der globalen Variablen ersetzt.

5. Verfahren nach einem der vorhergehenden Ansprüche, **dadurch gekennzeichnet, dass** an der wenigstens einen ausgewählten Funktion vorgenommene Ersetzungen protokolliert werden.

6. Verfahren nach einem der vorhergehenden Ansprüche, **dadurch gekennzeichnet, dass** wenn wenigstens eine der an der ausgewählten Funktion vorgenommenen Ersetzungen einen Schreibzugriff betrifft, ein Schritt des Überschreibens der globalen Variablen mit dem Wert der Hilfsvariablen eingefügt wird.

7. Verfahren nach einem der vorhergehenden Ansprüche, **dadurch gekennzeichnet, dass** die Identifikation der interferierenden Funktionen in Schritt a) anhand von zusätzlich zum Objektcode der Funktionen bereitgestellter Information (DESCR, VAR) erfolgt.

8. Verfahren zum Vermeiden von Dateninkonsistenz zwischen Zugriffen verschiedener Funktionen einer Anwendung auf eine globale Variable in einem Datenverarbeitungssystem, wobei das Datenverarbeitungssystem symbolischen Objektcode einer Gesamtheit von in dem Datenverarbeitungssystem auszuführenden Funktionen (O1, ..., Om) bereitstellt und die Funktionen interferierende Funktionen (O1, 02, On, Om) umfassen, welche auf eine gleiche globale Variable (G1, G2) zugreifen, wobei die globale Variable (G1, G2) in dem symbolischen Objektcode jeder darauf zugreifenden Funktion mit einem jeweils für diese Funktion spezifischen Symbol (G1_Fi; G2_Fi) bezeichnet ist, **dadurch gekennzeichnet, dass** das Verfahren folgende Schritte umfasst:
a) Identifizieren derjenigen interferierenden Funktionen (O1, 02, On, Om) aus der Gesamtheit, die auf eine gleiche globale Variable (G1, G2) zugreifen;
b) Auswählen wenigstens einer interferierenden Funktion;
c) in jeder in Schritt b) ausgewählten Funktion oder in einer eine ausgewählte Funktion aufrufenden Funktion vor deren Aufruf Einfügen einer Anweisung (I) zum Kopieren der globalen Variablen (G1, G2) an einen dem funktionsspezifischen Symbol (G1_Fi; G2_{_}Fi) zugeordneten Speicherplatz, und
d) für jede in Schritt b) nicht ausgewählte Funktion: Verknüpfen des jeweils funktionsspezifischen Symbols mit einem der globalen Variablen (G1; G2) zugeordneten Speicherplatz.

9. Verfahren nach Anspruch 8, **dadurch gekennzeichnet, dass** die interferierenden Funktionen anhand einer Tabelle (VAR) identifiziert werden, die die in den Funktionen für die globale Variable verwendeten Symbole enthält.

10. Verfahren nach Anspruch 9, **dadurch gekennzeichnet, dass** der Objektcode mehrerer der interferierenden Funktionen aus Quellcode (S1, S2, ..., Sn) kompiliert wird, und dass ein Compiler (COMP) beim Kompilieren den im Quellcode der Funktionen enthaltenen gleichen Namen (G1; G2) der globalen Variable durch ein für jede Funktion spezifisches Symbol (G1_Fi; G2_Fi) ersetzt und die Tabelle (VAR) anlegt.

11. Verfahren nach einem der Ansprüche 8 bis 10, **dadurch gekennzeichnet, dass** wenn die ausgewählte Funktion auf den dem funktionsspezifischen Symbol zugeordneten Speicherplatz schreibend zugreift, ein Schritt des Überschreibens C der globalen Variablen mit dem Wert der Kopie eingefügt wird.

12. Verfahren nach einem der vorhergehenden Ansprüche, **gekennzeichnet durch** einen Schritt
a') des Identifizierens von Funktionen unter den interferierenden Funktionen, die in der Lage sind, von einer anderen Funktion unterbrochen zu werden,
wobei in Schritt b) nur in Schritt a') identifizierte Funktionen ausgewählt werden.

13. Verfahren nach Anspruch 12, **dadurch gekennzeichnet, dass** die Identifikation des Schritts a') anhand von zusätzlich zum symbolischen Objektcode der Funktionen bereitgestellter Information (DESCR, PRIO) erfolgt.

14. Verfahren nach Anspruch 13, **dadurch gekennzeichnet, dass** die Fähigkeit der Funktionen, sich gegenseitig zu unterbrechen, anhand von in der zusätzlich bereitgestellten Information (DESCR, PRIO) angegebenen Prioritätswerten der Funktionen erkannt wird.

15. Entwicklungswerkzeug, bestechend aus Computerenweisungen, zur Durchführung des Verfahrens nach einem der Ansprüche 1 bis 7 mit einer Eingangsschnittstelle (OP) zum Empfangen des symbolischen Objektcodes der Funktionen (O1, ..., Om), **dadurch gekennzeichnet, dass** es eine Logikeinheit (OP) umfasst zum Identifizieren von auf eine gleiche globale Variable zugreifenden, so genannten interferierenden Funktionen (O1, 02, On, Om), eine Objektcode-Verarbeitungseinheit (OP, VLINK) zum Ersetzen eines Symbols der globalen Variable durch einen Verweis auf einen mit einem Wert der globalen Variablen initialisierten Speicherplatz einer Hilfsvariablen in dem Objektcode wenigstens einer unter den interferierenden Funktionen (O1, 02, On, Om) ausgewählten Funktion und einen Linker zum Linken des Objektcodes der Gesamtheit der Funktionen zur lauffähigen Anwendung nach der Verarbeitung durch die Objektcode-Verarbeitungseinheit (OP, VLINK).

16. Entwicklungswerkzeug, bestchend aus computer anweisungen zur Durchführung des Verfahrens nach einem der Ansprüche 8 bis 11 mit einer Eingangsschnittstelle zum Empfangen des symbolischen Objektcodes der Funktionen (O1, ..., Om), **dadurch gekennzeichnet, dass** es eine Logikeinheit umfasst zum Identifizieren der auf eine gleiche globale Variable zugreifenden, so genannten interferierenden Funktionen (O1, 02, On, Om), wobei die globale Variable in dem Objektcode jeder darauf zugreifenden Funktion mit einem anderen Symbol bezeichnet ist, eine Objektcode-Verarbeitungseinheit (LINK) zum Einfügen eines Befehls (I) zum Kopieren der globalen Variablen an einen dem funktionsspezifischen Symbol einer ausgewählten Funktion zugeordneten Speicherplatz, und einen Linker (LINK) zum Linken des Objektcodes der Gesamtheit der Funktionen zur lauffähigen Anwendung nach der Verarbeitung durch die Objektcode-Verarbeitungseinheit, der eingerichtet ist, das von der ausgewählten Funktion für die globale Variable verwendete Symbol (G1_Fi; G2_Fi) mit dem diesem Symbol zugeordneten Speicherplatz und das von einer nicht ausgewählten Funktion für die globale Variable verwendete Symbol mit einem Speicherplatz der globalen Variablen (G1; G2) zu verknüpfen.

## Claims

1. Method for preventing data inconsistency between accesses of different functions of an application to a global variable in a data processing system, the data processing system providing symbolic object code of all functions (O1, ..., Om) to be performed in the data processing system, and the functions comprising interfering functions (O1, 02, On, Om) which access an identical global variable, **characterized in that** the method comprises the following steps of:
a) identifying those interfering functions (O1, 02, On, Om) from all of the functions which access an identical global variable;
b) selecting at least one interfering function;
c) inserting a step (I) of initializing an auxiliary variable with the value of the global variable into the object code of each function selected in step b) or of a function calling a selected function before said function is called;
d) replacing a symbol of the global variable in the object code of the selected function with a reference to a storage location of the auxiliary variable.

2. Method according to Claim 1, **characterized in that**, in step d), the symbol of the global variable is replaced with the symbol of the auxiliary variable in the symbolic object code of the selected function and the symbol of the auxiliary variable is then replaced with the reference to the storage location of the auxiliary variable.

3. Method according to Claim 1, **characterized in that**, in step d), a linker directly replaces the symbol of the global variable with the reference to the storage location of the auxiliary variable.

4. Method according to Claim 3, **characterized in that** the linker replaces the symbol of the global variable with a reference to a storage location of the global variable in at least one interfering function which has not been selected.

5. Method according to one of the preceding claims, **characterized in that** replacements carried out on the at least one selected function are logged.

6. Method according to one of the preceding claims, **characterized in that** a step of overwriting the global variable with the value of the auxiliary variable is inserted when at least one of the replacements carried out on the selected function concerns write access.

7. Method according to one of the preceding claims, **characterized in that** the interfering functions are identified in step a) using information (DESCR, VAR) provided in addition to the object code of the functions.

8. Method for preventing data inconsistency between accesses of different functions of an application to a global variable in a data processing system, the data processing system providing symbolic object code of all functions (O1, ..., Om) to be performed in the data processing system, and the functions comprising interfering functions (O1, O2, On, Om) which access an identical global variable (G1, G2), the global variable (G1, G2) being denoted, in the symbolic object code of each function accessing said variable, with a symbol (G1_Fi; G2_Fi) specific to this function in each case, **characterized in that** the method comprises the following steps of:
a) identifying those interfering functions (O1, 02, On, Om) from all of the functions which access an identical global variable (G1, G2);
b) selecting at least one interfering function;
c) inserting an instruction (I) to copy the global variable (G1, G2) to a storage location assigned to the function-specific symbol (G1_Fi; G2_Fi) in each function selected in step b) or in a function calling a selected function before said function is called; and
d) for each function not selected in step b): linking the respective function-specific symbol to a storage location assigned to the global variable (G1; G2).

9. Method according to Claim 8, **characterized in that** the interfering functions are identified using a table (VAR) containing the symbols used for the global variable in the functions.

10. Method according to Claim 9, **characterized in that** the object code of a plurality of the interfering functions is compiled from source code (S1, S2, ..., Sn), and **in that**, during compiling, a compiler (COMP) replaces the identical name (G1; G2) of the global variable, which is contained in the source code of the functions, with a symbol (G1_Fi; G2_Fi) specific to each function and creates the table (VAR).

11. Method according to one of Claims 8 to 10, **characterized in that**, when the selected function has write access to the storage location assigned to the function-specific symbol, a step of overwriting C the global variable with the value of the copy is inserted.

12. Method according to one of the preceding claims, **characterized by** a step
a') of identifying functions from the interfering functions which are able to be interrupted by another function,
only functions identified in step a') being selected in step b).

13. Method according to Claim 12, **characterized in that** the identification in step a') is carried out using information (DESCR, PRIO) provided in addition to the symbolic object code of the functions.

14. Method according to Claim 13, **characterized in that** the ability of the functions to interrupt each other is detected using priority values of the functions, which values are indicated in the additionally provided information (DESCR, PRIO).

15. Development tool consisting of computer instructions for carrying out the method according to one of Claims 1 to 7, having an input interface (OP) for receiving the symbolic object code of the functions (O1, ..., Om), **characterized in that** said tool comprises a logic unit (OP) for identifying so-called interfering functions (O1, 02, On, Om) which access an identical global variable, an object code processing unit (OP, VLINK) for replacing a symbol of the global variable with a reference to a storage location of an auxiliary variable, which is initialized with a value of the global variable, in the object code of at least one function selected from the interfering functions (O1, O2, On, Om), and a linker for linking the object code of all of the functions to the executable application after processing by the object code processing unit (OP, VLINK).

16. Development tool consisting of computer instructions for carrying out the method according to one of Claims 8 to 11, having an input interface for receiving the symbolic object code of the functions (O1, ..., Om), **characterized in that** said tool comprises a logic unit for identifying the so-called interfering functions (O1, 02, On, Om) which access an identical global variable, the global variable being denoted with a different symbol in the object code of each function accessing said variable, an object code processing unit (LINK) for inserting an instruction (I) to copy the global variable to a storage location assigned to the function-specific symbol of a selected function, and a linker (LINK) for linking the object code of all of the functions to the executable application after processing by the object code processing unit, said linker being set up to link the symbol (G1_Fi; G2_Fi) used for the global variable by the selected function to the storage location assigned to this symbol and to link the symbol used for the global variable by a function which has not been selected to a storage location of the global variable (G1; G2).

## Revendications

1. Procédé pour éviter l'incohérence des données entre les accès par différentes fonctions d'une application à une variable globale dans un système de traitement de données, le système de traitement de données mettant des codes d'objet symboliques à la disposition d'un ensemble de fonctions (O1, ..., Om) à exécuter dans le système de traitement de données et les fonctions comprenant des fonctions interférentes (O1, 02, On, Om) qui accèdent à une même variable globale, **caractérisé en ce que** le procédé comprend les étapes suivantes :
a) identification des fonctions interférentes (O1, 02, On, Om) parmi l'ensemble de celles qui accèdent à une même variable globale ;
b) sélection d'au moins une fonction interférente ;
c) insertion d'une étape (I) d'initialisation d'une variable auxiliaire avec la valeur de la variable globale de chaque fonction sélectionnée à l'étape b) ou d'une fonction invoquant une fonction sélectionnée avant son invocation ;
d) remplacement d'un symbole de la variable globale dans le code d'objet de la fonction sélectionnée par un renvoi à un emplacement mémoire de la variable auxiliaire.

2. Procédé selon la revendication 1, **caractérisé en ce qu'**à l'étape d), le symbole de la variable globale est remplacé par le symbole de la variable auxiliaire dans le code d'objet symbolique de la fonction sélectionnée et ensuite le symbole de la variable auxiliaire est remplacé par le renvoi à l'emplacement mémoire de la variable auxiliaire.

3. Procédé selon la revendication 1, **caractérisé en ce qu'**à l'étape d), un lien remplace le symbole de la variable globale directement par le renvoi à l'emplacement mémoire de la variable auxiliaire.

4. Procédé selon la revendication 3, **caractérisé en ce que** le lien dans au moins une fonction interférente non sélectionnée remplace le symbole de la variable globale par un renvoi à un emplacement mémoire de la variable globale.

5. Procédé selon l'une des revendications précédentes, **caractérisé en ce que** les remplacements effectués sur l'au moins une fonction sélectionnée sont enregistrés dans un journal.

6. Procédé selon l'une des revendications précédentes, **caractérisé en ce que** lorsqu'au moins l'un des remplacements effectués sur la fonction sélectionnée concerne un accès en écriture, une étape d'écrasement de la variable globale par la valeur de la variable auxiliaire est insérée.

7. Procédé selon l'une des revendications précédentes, **caractérisé en ce que** l'identification des fonctions interférentes à l'étape a) est effectuée au moyen d'informations (DESCR, VAR) mises à disposition des fonctions en plus du code d'objet.

8. Procédé pour éviter l'incohérence des données entre les accès par différentes fonctions d'une application à une variable globale dans un système de traitement de données, le système de traitement de données mettant des codes d'objet symboliques à la disposition d'un ensemble de fonctions (O1, ..., Om) à exécuter dans le système de traitement de données et les fonctions comprenant des fonctions interférentes (O1, O2, On, Om) qui accèdent à une même variable globale (G1, G2), la variable globale (G1, G2) étant désignée dans le code d'objet symbolique de chaque fonction qui y accède par un symbole (G1_Fi ; G2_Fi) à chaque fois spécifique à cette fonction, **caractérisé en ce que** le procédé comprend les étapes suivantes :
a) identification des fonctions interférentes (O1, 02, On, Om) parmi l'ensemble de celles qui accèdent à une même variable globale (G1, G2) ;
b) sélection d'au moins une fonction interférente ;
c) dans chaque fonction sélectionnée à l'étape b) ou dans une fonction invoquant une fonction sélectionnée avant son invocation, insertion d'une instruction (I) pour copier la variable globale (G1, G2) à un emplacement mémoire associé au symbole (G1_Fi ; G2_Fi) spécifique à la fonction ; et
d) pour chaque fonction non sélectionnée à l'étape b), combinaison du symbole à chaque fois spécifique à la fonction avec un emplacement mémoire associé à la variable globale (G1 ; G2).

9. Procédé selon la revendication 8, **caractérisé en ce que** les fonctions interférentes sont identifiées au moyen d'une table (VAR) qui contient les symboles utilisés dans les fonctions pour la variable globale.

10. Procédé selon la revendication 9, **caractérisé en ce que** le code d'objet de plusieurs des fonctions interférentes est compilé à partir d'un code source (S1, S2, ..., Sn) et **en ce qu'**un compilateur (COMP), lors de la compilation, remplace les mêmes noms (G1 ; G2) de la variable globale contenus dans le code source des fonctions par un symbole (G1_Fi ; G2_Fi) spécifique à chaque fonction et crée la table (VAR).

11. Procédé selon l'une des revendications 8 à 10, **caractérisé en ce que** lorsque la fonction sélectionnée accède à l'emplacement mémoire associé au symbole spécifique à la fonction, une étape d'écrasement C de la variable globale par la valeur de la copie est insérée.

12. Procédé selon l'une des revendications précédentes, **caractérisé par** une étape
a') identification des fonctions parmi les fonctions interférentes qui sont en mesure d'être interrompues par une autre fonction,
seules les fonctions identifiées à l'étape a') étant sélectionnées à l'étape b).

13. Procédé selon la revendication 12, **caractérisé en ce que** l'identification de l'étape a') est effectuée au moyen d'informations (DESCR, PRIO) mises à disposition des fonctions en plus du code d'objet symbolique.

14. Procédé selon la revendication 13, **caractérisé en ce que** l'aptitude des fonctions de s'interrompre mutuellement est détectée au moyen de valeurs de priorité des fonctions indiquées dans les informations (DESCR, PRIO) supplémentaires mises à disposition.

15. Outil de développement composé d'instructions informatiques pour mettre en oeuvre un procédé selon l'une des revendications 1 à 7, comprenant une interface d'entrée (OP) pour recevoir le code d'objet symbolique des fonctions (O1, ..., Om), **caractérisé en ce qu'**il comprend une unité logique (OP) pour identifier des fonctions dites interférentes (O1, 02, On, Om) qui accèdent à une même variable globale, une unité de traitement de code d'objet (OP, VLINK) pour remplacer un symbole de la variable globale par un renvoi à un emplacement mémoire d'une variable auxiliaire initialisé avec une valeur de la variable globale dans le code d'objet d'au moins une fonction sélectionnée parmi les fonctions interférentes (O1, O2, On, Om) et un lien pour lier le code d'objet de l'ensemble des fonctions en vue d'une utilisation fonctionnelle après le traitement par l'unité de traitement de code d'objet (OP, VLINK).

16. Outil de développement composé d'instructions informatiques pour mettre en oeuvre un procédé selon l'une des revendications 8 à 11, comprenant une interface d'entrée pour recevoir le code d'objet symbolique des fonctions (O1, ..., Om), **caractérisé en ce qu'**il comprend une unité logique pour identifier des fonctions dites interférentes (O1, 02, On, Om) qui accèdent à une même variable globale, la variable globale dans le code d'objet de chaque fonction qui y accède étant désignée par un symbole différent, une unité de traitement de code d'objet (LINK) pour insérer une instruction (I) en vue de copier la variable globale à un emplacement mémoire associé au symbole spécifique à la fonction d'une fonction sélectionnée, et un lien (LINK) pour lier le code d'objet de l'ensemble des fonctions en vue d'une utilisation fonctionnelle après le traitement par l'unité de traitement de code d'objet, lequel est configuré pour combiner le symbole (G1_Fi ; G2_Fi) utilisé par la fonction sélectionnée pour la variable globale avec l'emplacement mémoire associé à ce symbole et le symbole utilisé par une fonction non sélectionnée pour la variable globale avec un emplacement mémoire de la variable globale (G1 ; G2).
